Europäisches Patentamt

European Patent Office

Office européen des brevets

(11) Publication number: **0 276 579**
**A1**

## (12) EUROPEAN PATENT APPLICATION

(21) Application number: **87311513.3**

(22) Date of filing: **30.12.87**

(51) Int. Cl.4: **B01D 27/06** , B01D 27/08 ,
F02M 37/22

(30) Priority: **30.01.87 GB 8702102**

(43) Date of publication of application:
**03.08.88 Bulletin 88/31**

(84) Designated Contracting States:
**DE ES FR GB IT**

(71) Applicant: **LUCAS INDUSTRIES public limited
company**
**Great King Street**
**Birmingham, B19 2XF West Midlands(GB)**

(72) Inventor: **Furlong, Keith Richard**
**95 Thistledown Singlewell**
**Gravesend, Kent(GB)**
Inventor: **Turner, Andrew**
**96 Richmond Road**
**Gillingham Kent(GB)**

(74) Representative: **Thompson, George Michael et
al**
**MARKS & CLERK Alpha Tower Suffolk Street
Queensway**
**Birmingham B1 1TT(GB)**

(54) Filter units.

(57) A fuel filter including a casing (10) closed at one end and closed at the other end by a closure member (17). Within the casing is a tubular member (16) between which and the inner wall of the casing is a paper filter element (24). A seal member (18) is provided between the end of the tubular member and the closure member and the closure member defines apertures (19, 20). The aperture (19) opens into the tubular member and the aperture (20) into a space defined between the closure member and the element. The unit in use is secured to a support (28) using a bolt (27) which is engaged with a threaded blind bore (26) formed in a block (25) secured to the closure member. The apertures (19, 20) conveniently are formed by short spigots defined by the closure member.

## "FILTER UNITS"

This invention relates to a filter unit more particularly but not exclusively, to a filter unit for incorporation in a fuel supply system of an internal combustion engine.

One known form of a filter unit comprises a casing which is closed at one end and in which is located an annular paper filter element. The filter element surrounds a tubular member and the opposite end of the casing is closed by a perforated plate in which is formed a central screw threaded aperture which opens into the tubular member. The filter unit in use is supported by a mounting which defines a screw threaded spigot for engagement within said aperture. Essential components are a pair of seal rings one of which is mounted on said spigot to form a seal with said tubular member and the other of which is sandwiched between the casing and a sealing surface defined by the mounting. This seal ring has a diameter which is substantially equal to the diameter of the casing. It is important that the seal ring should not become dislodged when assembling the casing to the mounting and for this reason it is located in a channel which is formed in the mounting. The seal ring should be changed each time the casing and the filter element therein is replaced a task which requires some care. Moreover, there is a tendency to overtighten the casing which often results in the necessity of using a filter wrench to unscrew the casing from the mounting.

Another form of filter unit utilizes a casing the one end of which is provided with openings and a separate end closure is engaged with the one end of the casing, the mounting, the casing and the end closure being held in assembled relationship by means of a through bolt. This form of filter unit still utilizes the aforesaid seals but it does have the advantage that it is easier to detach the casing from the mounting even though in the process some fuel may be spilled. One disadvantage is that a further seal ring must be provided between the casing and the end closure and a further disadvantage is that during assembly two components have to be correctly positioned.

According to the invention a filter unit comprises a casing which is closed at one end and which has a closure member at the other end, a tubular member extending within the casing, said tubular member defining with the inner wall of the casing a space in which is located a filter element, seal means extending between the closure member and the adjacent end of the tubular member, first and second apertures formed in said closure member, the first aperture opening into said tubular member and the second aperture opening into a space defined between the closure member and the filter element, and means carried by the closure member for engagement in use with complementary means on a support, the support also defining passages connecting with said openings respectively.

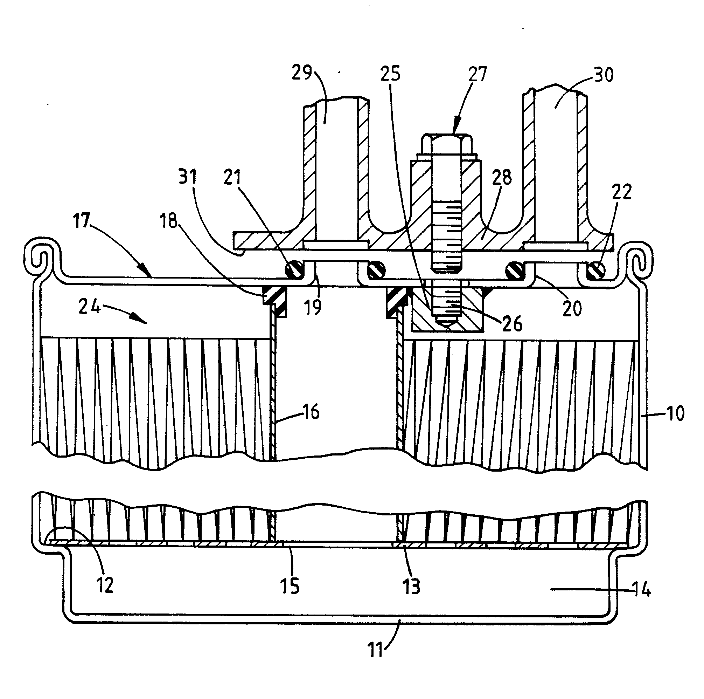

An example of a filter unit in accordance with the invention will now be described with reference to the accompanying drawing which shows a sectional side elevation of the filter unit prior to assembly to a support.

Referring to the drawing the filter unit comprises a casing comprising a side wall 10 and an integral end wall 11, the walls in the particular example, being formed from sheet metal. Adjacent the wall 11 the side wall 10 defines a step 12 against which is located an apertured plate 13 which defines a space 14 with the end wall 11.

The plate 13 has a central aperture 15 and resting on the plate and being of slightly larger diameter than the aperture 15 is a tubular member 16 which extends within the casing to adjacent a closure member 17 formed from sheet metal and which serves to close the open end of the casing, the edge of the closure member being rolled with the end portion of the side wall 10. Intermediate the end of the tubular member 16 and the closure member 17 is an annular seal member 18 which has a reduced portion located within the tubular member. The closure member is provided with a central aperture 19 which opens into the interior of the tubular member 16 and an aperture 20 which is offset. Conveniently the apertures are formed by swaging the material of the closure member to form short spigots about which are located sealing rings 21, 22 respectively.

Located in the annular space defined between the outer surface of the tubular member 16 and the inner surface of the wall 10 of the casing is a pleated filter element 24 which is formed from paper in a well known manner. The filter element rests upon the plate 13 and defines a space with the closure member 17 into which the opening 20 extends.

The closure member also mounts a metallic block 25 which is provided with a blind threaded bore 26 for engagement in use, by a bolt 27 carried on a support 28. The support defines passages 29, 30, which open onto a face 31 of the support which in use is presented to the closure member. Surrounding the ends of the passages 29, 30, are recesses into which extend the end portions of the spigots defining the openings 19, 20 and the arrangement is such that when the bolt is tightened within the bore 26, the filter unit will be retained relative to the support with the sealing members 21 and 22 establishing a fuel tight seal so as to prevent leakage of fuel from the passages 29, 30.

The support 28 is conveniently formed so that the filter unit can only be assembled to the support in one way.

When it is required to change the filter unit it is a simple matter to unscrew the bolt 27 and detach the filter unit from the support.

## Claims

1. A filter unit comprising a casing (10) which is closed at one end, a closure member (17) serving to close the opposite end of the casing, a tubular member (16) extending within the casing and defining with the inner wall of the casing a space in which is located a filter element (24) characterized by a seal means (18) for establishing a seal between said tubular member (16) and the closure member (17), a first aperture (19) in said closure member, said first aperture opening into said tubular member, a second aperture (20) in said closure member said second aperture opening into a space defined between the closure member (17) and the filter element (24) and means (25) carried by the closure member for engagement in use with complementary means (27) on a support (28), said support also defining passages (29, 30) which connect with said apertures.

2. A filter unit according to Claim 1 characterized in that said apertures (19, 20) are defined by short hollow spigots about which are located seal rings (21, 22) respectively.

3. A filter unit according to Claim 1 or Claim 2 characterized in that said means comprises a block (25) in which is formed a threaded blind bore (26) for engagement by a bolt (27) carried by the support.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-2 120 568 (LUCAS INDUSTRIES) * Figures 2,3; page 1, line 115 - page 2, line 6; page 2, lines 26-28,62-64 * | 1,2 | B 01 D 27/06 B 01 D 27/08 F 02 M 37/22 |
| Y | GB-A-1 584 517 (R. BOSCH GmbH) * Figures 1,3,4; page 2, lines 1-5 * | 1,2 | |
| A | FR-A-2 090 664 (C.A.V. LTD) * Figures; page 1, line 28 - page 2, line 5 * | 1,3 | |
| A | DE-A-2 445 454 (R. BOSCH GmbH) * Figure 1 * | 1,3 | |
| A | US-A-3 067 880 (BOWERS) * Figure 1; column 2, lines 20-21 * | 1,3 | |
| A | FR-A- 654 658 (GENERAL MOTORS CORP.) * Figures 1,2; page 2, lines 14-18 * | 1,3 | |

TECHNICAL FIELDS
SEARCHED (Int. Cl.4)

B 01 D
F 02 M

The present search report has been drawn up for all claims

| Place of search | Date of completion of the search | Examiner |
|---|---|---|
| THE HAGUE | 04-05-1988 | CZECH B.P. |